# EUROPÄISCHE PATENTANMELDUNG

(11) **EP 1 118 276 A2**
(43) Veröffentlichungstag der Anmeldung: **25.07.2001**
(21) Anmeldenummer: 01101259.8
(22) Anmeldetag: 19.01.2001
(51) Int. Cl.: A23L 2/54

(54) **Vorrichtung zur Imprägnierung von Flüssigkeiten mit einem Gas**

(30) Priorität: 20.01.2000 DE 10002335
(71) Anmelder: Linde Gas Aktiengesellschaft, 82049 Höllriegelskreuth (DE)
(72) Erfinder: Schmidtke, Wolfgang, 33102 Paderborn (DE); Stoltze, Björn, Dipl.-Ing., 80796 München (DE); Lohse, Eberhard, Dipl.-Ing., 85748 Garching (DE)

(57) **Zusammenfassung**

Die Erfindung betrifft eine Vorrichtung zur Imprägnierung von Flüssigkeiten mit einem Gas, z.B. zum Carbonisieren von Leitungswasser. Um die mit dem Gas imprägnierte Flüssigkeit möglichst blasenfrei über eine z.B. als Wasserhahn ausgebildete Flüssigkeitsabgabeeinrichtung mit Absperreinrichtung (14, 15) zapfen zu können, wird vorgeschlagen, zwischen der Gaseintragseinrichtung (19, 17, 18) und der Absperreinrichtung (14) ein Druckhalteventil (22) mit Entgasungsfunktion zwischenzuschalten (Figur).

## Beschreibung

Die Erfindung betrifft eine Vorrichtung zur Imprägnierung von Flüssigkeiten mit einem Gas, welche eine mit einer Flüssigkeitsaufnahmeeinrichtung in Verbindung stehende Gaseintragseinrichtung und eine an die Flüssigkeitsaufnahmeeinrichtung angeschlossene Flüssigkeitsabgabeeinrichtung mit einer Absperreinrichtung aufweist.

Beim Imprägnieren von Flüssigkeiten mit einem Gas wird eine Flüssigkeit, z.B. Wasser, mit einem Gas, z.B. Kohlendioxid, angereichert, um eine Flüssigkeit, z.B. carbonisiertes Wasser, zu erhalten, die das gelöste Gas enthält. Insbesondere zur Herstellung von carbonisiertem Trinkwasser aus herkömmlichem Leitungswasser ist es bereits vorgeschlagen worden, das Trinkwasser mittels eines statischen oder dynamischen Mischers mit Kohlendioxid anzureichern, so daß über eine Flüssigkeitsabgabeeinrichtung, z.B. einem Wasserhahn, kohlendioxidhaltiges Tafelwasser gezapft werden kann. Dabei besteht eine wesentliche Schwierigkeit darin, das Gas möglichst vollständig in der Flüssigkeit zu lösen. Trotz großer Anstrengungen bezüglich der Entwicklung besonderes effektiver Gaseintragseinrichtungen und Gaslösungseinrichtungen ist bisher das Problem, die mit Gas angereicherte Flüssigkeit möglichst blasenfrei zapfen zu können, noch nicht zufriedenstellend gelöst worden. Einerseits gelingt es mit den zur Verfügung stehenden Gaseintragseinrichtungen und Gaslösungseinrichtungen, z.B. Düsensystemen und herkömmlichen statischen Mischem, nicht immer, das Gas vollständig in der Flüssigkeit zu lösen, so daß ungelöste Gasblasen mit der Flüssigkeit zur Flüssigkeitsabgabeeinrichtung, z.B. dem Wasserhahn, gelangen. Andererseits kann es nach dem Gaseintrag auch wieder zur Gasblasenbildung in dem zur Flüssigkeitsabgabeeinrichtung führenden Flüssigkeitsstrom kommen. Diese Effekte haben zur Folge, daß kein blasenfreies Zapfen der mit dem Gas angereicherten Flüssigkeit möglich ist. Beim Öffnen der Absperreinrichtung kann es zu unerwünschtem und unkontrolliertem Gasaustrag kommen, der ein gleichmäßiges Ausströmen der Flüssigkeit verhindert. Insbesondere bei Anwendungen im Haushaltsbereich, z.B. zur Herstellung von carbonisiertem Trinkwasser am Wasserhahn, können diese Probleme eine Markteinführung derartiger Systeme behindern oder gar unmöglich machen, da hier eine unbefriedigende Handhabbarkeit vom Verbraucher am wenigsten akzeptiert wird.

Der vorliegenden Erfindung liegt daher die Aufgabe zugrunde, eine Vorrichtung der eingangs genannten Art so auszugestalten, daß auf wirtschaftliche Weise ein weitgehend blasenfreies Zapfen der mit dem Gas angereicherten Flüssigkeit ermöglicht wird.

Diese Aufgabe wird erfindungsgemäß dadurch gelöst, daß zwischen der Gaseintragseinrichtung und der Absperreinrichtung ein Druckhalteventil mit Entgasungsfunktion zwischengeschaltet ist.

Das Druckhalteventil mit Entgasungsfunktion weist zweckmäßigerweise ein mit der Flüssigkeit füllbares Gehäuse auf, das einen Schwimmer enthält, welcher bei Füllung des Gehäuses mit der Flüssigkeit eine im oberen Bereich des Gehäuses befindliche Entgasungsöffnung abdichtet und bei Ausbildung eines Gaspolsters oberhalb des Flüssigkeitsspiegels im Gehäuse die Entgasungsöffnung freigibt. Zur Herstellung derartiger Druckhalteventile mit Entgasungsfunktion können herkömmliche Entlüftungsventile verwendet werden, die beispielsweise im Heizungsbereich zur Entlüftung von Heizkörpern eingesetzt werden. In diese Entlüftungsventile wird ein Schwimmer eingebaut, der bei Befüllung des Gehäuses mit der Flüssigkeit nach oben gegen eine Dichtung, z.B. eine Weichgummidichtung, gedrückt wird und die Entgasungsöffnung verschließt. Falls in der Flüssigkeit Gasblasen vorhanden sind, so steigen diese im Gehäuse nach oben und bilden über dem Flüssigkeitsspiegel ein Gaspolster, das den Flüssigkeitsspiegel nach unten drückt. Dadurch wird auch der Schwimmer nach unten gedrückt und gibt die Entgasungsöffnung wieder frei. Das Gas kann so in die Atmosphäre entweichen. Als Folge steigt der Flüssigkeitsspiegel wieder, so daß der Schwimmer erneut gegen die Dichtung der Entgasungsöffnung gedrückt wird und diese verschließt. Auf diese Weise wird eine Selbstregulierung erreicht, wobei der Druck in der dem Druckhalteventil vorgeschalteten Flüssigkeitsaufnahmeeinrichtung konstant gehalten werden kann und gleichzeitig überschüssiges Gas abgezogen wird. Dies bewirkt, daß an der Flüssigkeitsabgabeeinrichtung gasblasenfreie Flüssigkeit gezapft werden kann.

Die Erfindung eignet sich insbesondere zur Carbonisierung von Trinkwasser, das dem herkömmlichen Leitungswassemetz entnommen wird. Hierzu ist die Flüssigkeitsaufnahmeeinrichtung, die beispielsweise als Rohr ausgebildet sein kann, mit dem Leitungswassernetz verbunden. Die Gaseintragseinrichtung, welche z.B. als Düse oder einfacher Rohrstutzen ausgebildet sein kann, steht in diesem Fall mit einem Kohlendioxidvorrat, z.B. einer Kohlendioxidgaspatrone in Verbindung. Zum Lösen des Gases in der Flüssigkeit wird vorzugsweise ein statischer oder dynamischer Mischer eingesetzt, der in der Flüssigkeitsaufnahmeeinrichtung angeordnet ist. Hierzu können z.B. parallel und vertikal angeordnete Rohrabschnitte verwendet werden, deren Innenräume an mindestens einem Ende miteinander verbunden sind und die mit Füllkörpern verschiedenster Geometrie, insbesondere Kugeln, gefüllt sind. Als Flüssigkeitsabgabeeinrichtung dient zweckmäßigerweise ein herkömmlicher Wasserhahn.

Mit der Erfindung wird erreicht, daß am Wasserhahn ein gleichmäßiger Strom an carbonisiertem Trinkwasser entnommen werden kann. Die einen gleichmäßigen Abfluß des Trinkwassers behindernden Gasblasen werden bereits vor Eintritt in den Wasserhahn mittels des Druckhalteventils mit Entgasungsfunktion vom Trinkwasser abgetrennt.

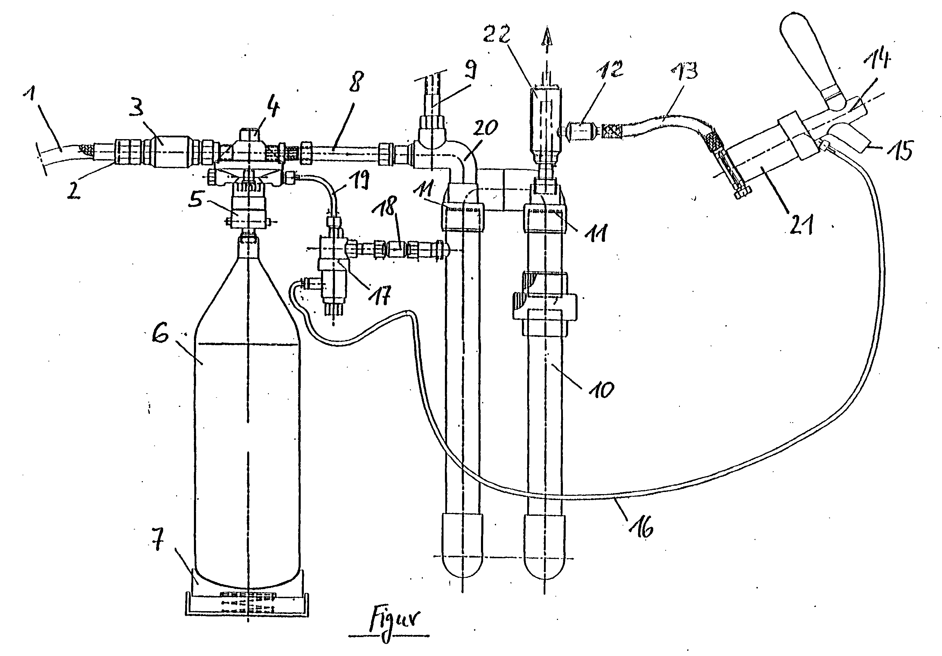

Im folgenden soll die Erfindung anhand eines in der Figur schematisch dargestellten Ausführungsbeispiels näher erläutert werden.

Leitungswasser wird über Leitung 1 dem herkömmlichen Leitungswassernetz entnommen und über einen Sieb 2 und ein Rückschlagventil 3 einer Gasdrosseleinrichtung 4 zugeführt. Die Gasdrosseleinrichtung 4 steht mit einem auf einer Kohlendioxidpatrone 6 sitzenden Patronenventil 5 in Verbindung. Die Kohlendioxidpatrone 6 ist mittels einer Halterung 7 in vertikaler Lage fixiert. Die Gasdrosseleinrichtung 4 wirkt derart auf das Patronenventil 5, daß die aus der Kohlendioxidpatrone 6 ausströmende Kohlendioxidvolumenstrom vom Leitungswasserdruck abhängt. Auf diese Weise wird gewährleistet, daß das Verhältnis der Mengenströme von Wasser und Kohlendioxid konstant gehalten wird. Das Leitungswasser wird über Leitung 8 einem Rohrstutzen 20 zugeführt, der eine Abzweigung 9 für nicht carbonisiertes Leitungswasser aufweist. Die Abzweigung 9 führt zu einer herkömmlichen Wasserhahnarmatur, über die übliches Kaltwasser und gegebenenfalls auch Warmwasser entnommen werden kann. An den Rohrstutzen 20 ist ein statischer Mischer 10 angeschlossen, der aus vier parallel und vertikal angeordneten Rohrabschnitten besteht, die strömungsmäßig miteinander verbunden sind. Das innere dieser Rohrabschnitte ist mit Kunststoffkugeln gefüllt. Die Kunststoffkugeln werden mittels Sieben 11 im Rohr zurückgehalten. Am Auslaß des statischen Mischers 10 ist ein Rückschlagventil 12 angeordnet, an das sich eine Zufuhrleitung 13 anschließt, die zu einem Wasserhahn 14 führt. Zwischen dem statischen Mischer 10 und dem Rückschlagventil 12 ist das Druckhalteventil 22 mit Entgasungsfunktion angeordnet. Nach Verlassen des statischen Mischers 10 im Wasser noch enthaltene Gasblasen werden in die Atmosphäre abgelassen, wobei der Druck im statischen Mischer 10 aufrechterhalten wird. Zwischen dem Rückschlagventil 12 und dem Wasserhahnauslaß 15 des Wasserhahns 14 ist eine Wasserdrosseleinrichtung, z.B. ein Drosselkegel, zum Druckabbau vorgesehen. Im vorliegenden Ausführungsbeispiel ist die Wasserdrosseleinrichtung in den Anschlußstutzen 21 des Wasserhahns 14 integriert. Zwischen der Wasserdrosseleinrichtung und dem Schließmechanismus, insbesondere dem Schließkegel des Wasserhahns 14, zweigt eine Wirkdruckleitung 16 ab, die mit einem Druckschalter 17 in Verbindung steht. Der Druckschalter 17 ist andererseits über Leitung 19 und die Gasdrosseleinrichtung 4 mit dem Patronenventil 5 der Kohlendioxidpatrone 6 verbunden. Der Druckschalter 17 ist über ein Rückschlagventil 18 an den statischen Mischer 10 angeschlossen.

### Die Wirkungsweise dieser Vorrichtung ist folgendermaßen:

An der Gasdrosseleinrichtung 4 liegt der übliche Leitungswasserdruck von ca. 3,5 bis ca. 4 bar an. Entsprechend wird Kohlendioxid aus der Kohlendioxidpatrone 6 über das Patronenventil 5 und die Leitung 19 dem Druckschalter 17 zugeführt. Bei geschlossenem Wasserhahn 14 liegt der genannte Leitungswasserdruck im gesamten System bis zum Wasserhahn 14 an. Falls carbonisiertes Leitungswasser dem Wasserhahnauslaß 15 entnommen werden soll, wird der Wasserhahn 14 geöffnet. Dadurch sinkt der Druck in der Zufuhrleitung 13 beispielsweise um ca. 1,0 bar, so daß über die Wirkdruckleitung 16 der Druckschalter 17 geöffnet wird. Somit kann Kohlendioxid über das Rückschlagventil 18 in den statischen Mischer 10 strömen. Im statischen Mischer 10 wird das Leitungswasser mit Kohlendioxid angereichert und Kohlendioxid wird im Leitungswasser gelöst. Das carbonisierte Leitungswasser fließt über die Zufuhrleitung 13 zum Wasserhahn 14 und kann über den Wasserhahnauslaß 15 entnommen werden. Wird der Wasserhahn 14 wieder geschlossen, so baut sich in der Zufuhrleitung 13 wieder der übliche Leitungswasserdruck in Höhe von ca. 3,5 bis ca. 4 bar auf, so daß über die Wirkdruckleitung 16 der Druckschalter 17 wieder geschlossen wird. Das Rückschlagventil 12 dient dazu, daß bei Öffnen der Zweigleitung 9 zum Zapfen von herkömmlichem Kaltwasser der Druck in der Zufuhrleitung 13 nicht abfällt und damit der Druck in der Wirkdruckleitung gehalten wird. Die mit der Zweigleitung 9 verbundene Wasserhahnarmatur kann auch mit dem Wasserhahn 14 zur Abgabe von carbonisiertem Leitungswasser kombiniert werden, so daß durch eine einzige Wasserhahnarmatur sowohl herkömmliches Leitungswasser als auch carbonisiertes Leitungswasser abgegeben werden kann. Außerdem kann in der Wirkdruckleitung 16 zusätzlich eine in der Figur nicht dargestellte Verzögerungseinrichtung eingebaut sein, die die Druckänderungen mit Zeitverzögerung an den Druckschalter 17 weitergibt.

Das Druckhalteventil 22 mit Entgasungsfunktion bleibt nach Schließen des Wasserhahns 14 solange aktiviert, bis der geringe freie Gasanteil abgeführt ist; bei weiterer Entnahme aus dem Wasserhahn 14 kann sofort blasenfrei gezapft werden.

## Patentansprüche

1. Vorrichtung zur Imprägnierung von Flüssigkeiten mit einem Gas, welche eine mit einer Flüssigkeitsaufnahmeeinrichtung (10) in Verbindung stehende Gaseintragseinrichtung (19, 17, 18) und eine an die Flüssigkeitsaufnahmeeinrichtung (10) angeschlossene Flüssigkeitsabgabeeinrichtung (15) mit einer Absperreinrichtung (14) aufweist, **dadurch gekennzeichnet,** daß zwischen der Gaseintragseinrichtung (19, 17, 18) und der Absperreinrichtung (14) ein Druckhalteventil (22) mit Entgasungsfunktion zwischengeschaltet ist.

2. Vorrichtung nach Anspruch 1, **dadurch gekennzeichnet,** daß das Druckhalteventil (22) mit Entgasungsfunktion ein mit der Flüssigkeit füllbares Gehäuse aufweist, das einen Schwimmer enthält, welcher bei Füllung des Gehäuses mit der Flüssigkeit eine im oberen Bereich des Gehäuses befindliche Entgasungsöffnung abdichtet und bei Ausbildung eines Gaspolsters oberhalb des Flüssigkeitsspiegels im Gehäuse die Entgasungsöffnung freigibt.

3. Vorrichtung nach Anspruch 1 oder 2, **dadurch gekennzeichnet,** daß in der Flüssigkeitsaufnahmeeinrichtung (10) ein statischer Mischer angeordnet ist.

4. Vorrichtung nach Anspruch 1 oder 2, **dadurch gekennzeichnet,** daß in der Flüssigkeitsaufnahmeeinrichtung (10) ein dynamischer Mischer angeordnet ist.

5. Vorrichtung nach einem der Ansprüche 1 bis 4, **dadurch gekennzeichnet,** daß die Flüssigkeitsaufnahmeeinrichtung (10) mit dem Leitungswassernetz verbunden ist, die Gaseintragseinrichtung (19, 17, 18) mit einem Kohlendioxidvorrat (6) in Verbindung steht und die Flüssigkeitsabgabeeinrichtung (15) mit der Absperreinrichtung (14) als Wasserhahn ausgebildet ist.
